# FASCICULE DE BREVET EUROPEEN

(11) **EP 0 581 680 B1**
(45) Date de publication et mention de la délivrance du brevet: **21.01.1998**
(21) Numéro de dépôt: 93401969.6
(22) Date de dépôt: 29.07.1993
(51) Int. Cl.: G02B 6/44

(54) **Ruban de fibres optiques marquées individuellement**
Optisches Bandkabel mit einzeln markierten Lichtfasern
Optical ribbon cable comprising individually marked fibres

(30) Priorité: 31.07.1992 FR 9209541
(43) Date de publication de la demande: 02.02.1994
(73) Titulaire: ALCATEL ALSTHOM COMPAGNIE GENERALE D'ELECTRICITE, 75008 Paris (FR)
(72) Inventeur: Bonicel, Jean-Pierre, F-69005 Lyon (FR); Giraud, Pierre, F-69300 Caluire (FR)
(74) Mandataire: Buffière, Michelle

(56) Documents cités:
- DE-A- 3 208 172
- DE-A- 3 427 835
- DE-A- 3 637 159
- GB-A- 2 109 581
- GB-A- 2 142 280
- US-A- 2 992 292

## Description

La présente invention concerne l'identification des fibres optiques encapsulées dans un revêtement commun et alors dites en ruban. Elle porte plus particulièrement sur une structure de ruban de fibres optiques individualisées, ce ruban étant lui même avantageusement individualisé.

Plusieurs solutions ont déjà été proposées pour individualiser des fibres optiques, en vue de permettre leur repérage dans un ruban ou même dans un faisceau de fibres indépendantes les unes des autres.

Selon le résumé du document JP-A-57040203, donné dans la base de données WPI, une fibre optique est protégée par un revêtement primaire coloré individualisé et par un revêtement secondaire transparent. Le revêtement primaire est en particulier une résine époxy colorée. Le revêtement secondaire inclut une couche intérieure d'amortissement en particulier en résine silicone transparente et une couche extérieure en particulier en nylon transparent.

Une coloration différente des revêtements primaires de différentes fibres est obtenue en utilisant différents colorants dans la résine époxy. Des fibres ainsi colorées différemment peuvent être assemblées en ruban et sont alors revêtues d'une couche commune d'amortissement et de la couche extérieure du revêtement secondaire précité. Pour des opérations d'épissurage, la couche extérieure et la couche d'amortissement du revêtement secondaire sont retirées et le revêtement primaire est lui-même éliminé à l'aide de gaze imprégné de solvant.

Cette solution d'individualisation des fibres par coloration de leur revêtement primaire peut poser des problèmes lors de la réalisation du revêtement primaire coloré. En effet, l'adjonction de colorant modifie la vitesse de polymérisation de la résine époxy exempte de colorant et dite alors naturelle. Elle rend la vitesse plus lente mais surtout variable en fonction de la coloration et de l'homogénéité des différents colorants. La qualité de la polymérisation devient en conséquence difficile à contrôler. Il en résulte souvent une mauvaise séparation des fibres individualisées du ruban et/ou un mauvais dénudage des fibres, pour les opérations d'épissurage à réaliser, essentiellement du fait des différences de qualité de polymérisation des revêtements colorés qui peuvent donner lieu au maintien de traces ou de particules de matière colorée sur certaines des fibres.

En outre, la présence de colorant, en particulier opaque et alors absorbant, dans le revêtement primaire peut interdire l'utilisation, lors d'opérations d'épissurage, des systèmes dits d'injection et de détection locales avec de telles fibres, selon lesquels on injecte de la lumière dans l'une des fibres à travers son revêtement primaire et on détecte la lumière transmise pareillement à travers le revêtement primaire.

Le document GB-A-2 109 581 enseigne quant à lui d'individualiser des fibres précédemment protégées par un revêtement primaire et de préférence par un revêtement secondaire, par une encre colorée recouvrant la surface extérieure des fibres protégées. Ceci est effectué lors de la réalisation d'un câble devant comporter ces fibres, en faisant défiler chacune de ces fibres à travers une station d'encrage, préalablement à sa mise en place dans le câble. L'encre utilisée est choisie pour présenter de bonnes qualité de recouvrement et être de séchage rapide.

Le document FR-A-2 549 238 se rapporte également à l'individualisation de fibres optiques. Selon ce document on assure une coloration en continu de la surface extérieure des fibres déjà protégées, par application d'une couche extérieure colorée sur chacune d'elles, les colorants de cette couche extérieure étant différents d'une fibre à une autre, et on réalise en outre des marques annulaires d'encre sur la couche extérieure colorée. L'encre est de couleur contrastée par rapport aux couleurs possibles de la couche extérieure colorée et est par exemple noire.

Le document DE-A-36 37159 divulgue de marquer une fibre à l'aide d'un ou de deux dispositifs d'injection d'une séquence de gouttelettes d'encre ou de peinture, qui sont déviées électrostatiquement au voisinage de leur point d'impact sur la fibre puis sont séchées.

Le document DE-A-34 27 835 divulgue d'appliquer initialement un revêtement coloré sur des fibres, de sécher ce revêtement, puis de réaliser un anneau de marquage sur les fibres et de le sécher.

Les solutions connues par ces quatre derniers documents permettent d'individualiser des fibres lorsque celles-ci sont laissées indépendantes les unes des autres. Les problèmes liés à une structure en ruban des fibres ne sont pas abordés et ne sont donc pas traités.

Le document EP-A-0262 340 divulgue un ruban de fibres optiques, dont les fibres munies de leur couche de protection sont équipées d'une couche périphérique pelable et sont ainsi incorporées dans un revêtement commun extérieur les assemblant en ruban, pour un accès aisé possible aux fibres individuelles par retrait du revêtement extérieur commun.

La présente invention a pour but de permettre une individualisation, aisée à réaliser et à détecter, de fibres optiques assemblées en ruban, en évitant les problèmes ci-avant pouvant découler conjointement du mode d'individualisation et de la structure en ruban. Elle a en outre pour but de permettre l'identification d'un ruban parmi d'autres analogues.

Elle a pour objet un ruban de fibres optiques individualisées, dans lequel les fibres protégées individuellement sont munies chacune d'une pellicule périphérique contenant un agent anti-adhésif et sont ainsi encapsulées côte à côte dans un revêtement commun extérieur, caractérisé en ce que lesdites fibres protégées portent des jeux de marques annulaires d'encre sur leur surface extérieure, ces jeux étant identiques les uns aux autres sur la même fibre protégée mais différents de l'une des fibres protégées à l'une des autres, assurant l'individualisation desdites fibres et traduisant le rang de chaque fibre concernée dans le ruban, et en ce que ladite pellicule périphérique sur chacune desdites fibres est transparente et recouvre les jeux de marques que porte cette fibre.

Le ruban selon l'invention présente en outre au moins l'une des particularités suivantes:
- les jeux de marques ont sensiblement le même pas de marquage sur toutes les fibres, sont sensiblement en regard les uns des autres et comportent chacun un nombre de marques traduisant le rang de la fibre concernée dans le ruban;
- lesdites marques d'encre sont de faible épaisseur, de 0,1 à quelques microns et de préférence inférieure à 5 microns;
- ladite pellicule est en résine polymérisable aux ultraviolets et est d'épaisseur réduite, de quelques microns et de préférence inférieure à 5 microns;
- le ruban comporte un marquage superficiel d'identification, réalisé à l'encre, sur ledit revêtement commun extérieur et traduisant un numéro affecté audit ruban dans un ensemble de rubans identiques.

Les caractéristiques et avantages de l'invention ressortiront de la description faite ci-après en regard des dessins ci-annexés. Dans ces dessins:
- la figure 1 est une vue partielle en perspective d'une fibre individualisée selon l'invention,
- la figure 2 est une vue schématique de plusieurs fibres optiques individualisées selon l'invention,
- les figures 3 et 4 représentent deux rubans de fibres optiques, conformes à l'invention et eux-mêmes individualisés.

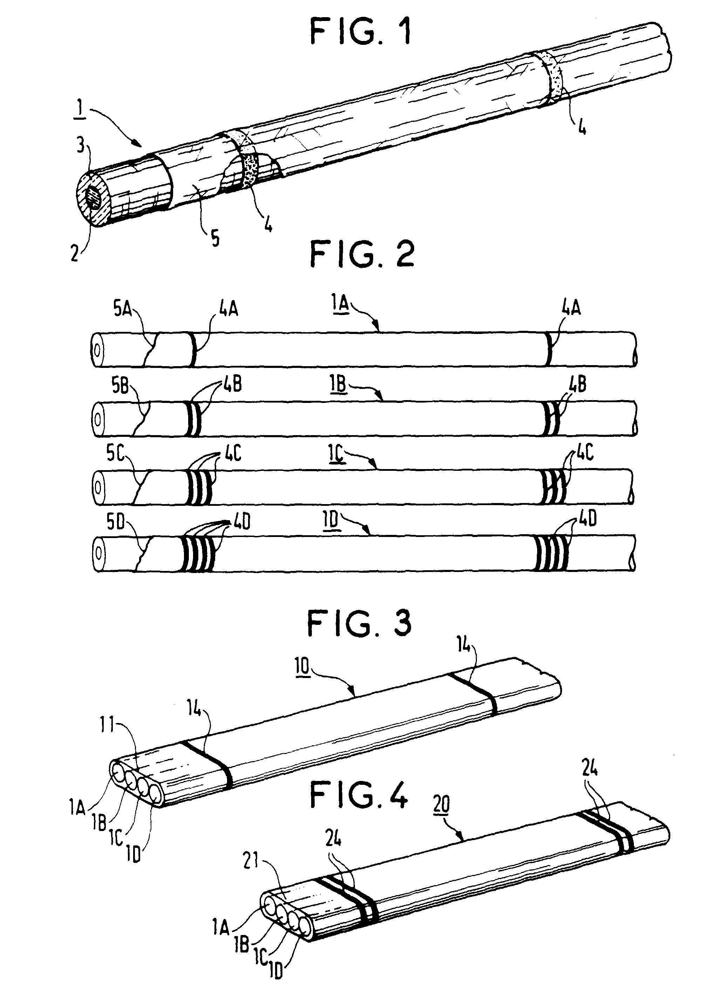

La fibre optique 1 illustrée dans la figure 1 comporte une partie optique centrale 2, constituée par le coeur et la gaine optiques non montrés séparément, et une partie externe de protection 3, constituée par un revêtement primaire et de préférence un revêtement secondaire non montrés séparément. La fibre protégée est à ce stade exempte de toute individualisation et en particulier sans coloration de masse de tout ou partie de sa partie externe de protection. Elle est individualisée par une série, continue ou non sur sa longueur, de jeux de marques annulaires d'encre 4, dites anneaux d'encre. Chaque jeu d'anneaux sur cette fibre 1 est dans cet exemple constitué d'un seul anneau. La fibre 1 ainsi marquée est recouverte d'une fine pellicule transparente de résine 5.

Les anneaux d'encre 4 sont réalisés par jet d'encre avec une encre choisie de faible viscosité, applicable en fine épaisseur et présentant en particulier une couleur foncée, telle que noire, contrastant sur la fibre protégée. Leur épaisseur est très réduite, de 0,1 à quelques microns et de préférence n'excédant pas 5 microns pour éviter la formation de microcourbures de part et d'autre des anneaux. Cette encre est utilisée avec un solvant et/ou peut être polymérisée aux ultratviolets.

La fine pellicule de recouvrement 5 est elle-même de très faible épaisseur, de quelques microns et de préférence inférieure à 5 microns. Elle est réalisée en résine transparente polymérisable aux ultraviolets. Cette résine contient un agent anti-adhésif pour l'assemblage en ruban de cette fibre 1 avec d'autres fibres. Elle est en particulier à base d'un polymère acrylique ou méthacrylique. L'agent anti-adhésif qu'elle contient reste stable dans le temps et est en particulier un composé carboxylique. Cette fine pellicule protège les anneaux superficiels d'individualisation de la fibre protégée.

La figure 2 montre quatre fibres individualisées notées 1A à 1D comparativement à la fibre 1 de la figure 1. Ces fibres sont analogues les unes aux autres à l'exception des jeux d'anneaux d'encre 4A à 4D qu'elles portent. Ces fibres ainsi marquées sont recouvertes individuellement par la pellicule finale notée 5A à 5D selon la fibre.

La fibre 1A est identique à la fibre 1 précitée, ses jeux d'anneaux 4A étant les mêmes que les jeux d'anneaux 4 précités. La fibre 1B porte des jeux de 2 anneaux 4B, la fibre 1C des jeux de 3 anneaux 4C et la fibre 1D des jeux de quatre anneaux. Ces jeux d'anneaux sont identiques les uns aux autres sur la même fibre et diffèrent simplement d'une fibre à l'autre. Ils sont de préférence au même pas de marquage et viennent sensiblement en regard les uns des autres quand les fibres sont assemblées. Les anneaux multiples d'un même jeu sont faiblement espacés les uns des autres relativement au pas de marquage.

Ces jeux d'anneaux d'encre, chacun à nombre différent d'anneaux d'une fibre à l'autre, permettent un repérage aisé des différentes fibres. Le nombre d'anneaux dans chaque jeu traduit en particulier le rang de la fibre concernée, quand les différentes fibres sont assemblées côte à côte en une structure de ruban.

Les figures 3 et 4 montrent deux rubans 10 et 20 comportant chacun quatre fibres individualisées qui sont identiques aux fibres 1A à 1D et ainsi désignées. Bien entendu, ces deux rubans peuvent comporter l'un et l'autre un nombre quelconque de fibres. Les fibres individualisées et recouvertes de leur fine pellicule sont encapsulées dans un revêtement commun extérieur, 11 ou 21 selon le ruban considéré. Ce revêtement commun extérieur est de préférence transparent ou semi-transparent. Il est de nature analogue à celle des pellicules recouvrant les fibres individuelles, mais sans agent anti-adhésif. Il porte lui-même des marques 14 ou 24 d'individualisation du ruban.

Ces dernières marques 14 ou 24, selon le ruban concerné, sont également des marques superficielles d'encre, réalisées par jet d'encre sur le ruban sous forme de jeux de barres ou éléments annulaires. Leur nombre est le même dans les jeux du même ruban mais diffère d'un ruban à l'autre. Il traduit le numéro affecté au ruban concerné dans un câble comportant plusieurs de ces rubans et/ou des informations additionnelles relatives au ruban.

Ce mode d'individualisation des fibres et des rubans eux-mêmes rend les rubans comme leurs fibres individuelles aisément identifiables. Il est rapide et aisé à réaliser. Il n'affecte en rien la vitesse et la qualité de polymérisation des résines, laissées naturelles, du revêtement commun du ruban et des revêtements primaire et secondaire des fibres, et permet ainsi une bonne séparation des fibres assemblées en ruban. Il ne fait également pas obstacle à l'utilisation des sytèmes dits d'injection et de détection locales de lumière à travers les revêtements de protection des fibres. En outre le coût de ce mode d'individualisation est nettement réduit relativement à celui réalisé par coloration de masse de l'un des revêtements.

## Revendications

1. Ruban de fibres optiques individualisées, dans lequel les fibres protégées individuellement sont munies chacune d'une pellicule périphérique contenant un agent anti-adhésif et sont ainsi encapsulées côte à côte dans un revêtement commun extérieur, caractérisé en ce que lesdites fibres protégées portent des jeux de marques annulaires d'encre (4) sur leur surface extérieure, ces jeux étant identiques les uns aux autres sur la même fibre protégée mais différents de l'une des fibres protégées à une autre, assurant l'individualisation desdites fibres (1A-1D), et traduisant le rang de chaque fibre concernée dans le ruban et en ce que la pellicule périphérique (5) sur chacune desdites fibres est transparente et recouvre les jeux de marques que porte cette fibre.

2. Ruban de fibres optiques selon la revendication 1, caractérisé en ce que lesdits jeux de marques sur les fibres protégées ont sensiblement le même pas de marquage.

3. Ruban de fibres optiques selon la revendication 2, caractérisé en ce que lesdits jeux de marques desdites fibres sont de préférence sensiblement en regard les uns des autres sur lesdites fibres.

4. Ruban de fibres optiques selon l'une des revendications 1 à 3, caractérisé en ce que lesdits jeux de marques diffèrent, de l'une des fibres à une autre, par le nombre de marques qu'ils comportent, ce nombre traduisant le rang de la fibre concernée dans le ruban.

5. Ruban de fibres optiques selon l'une des revendications 1 à 4, caractérisé en ce que lesdites marques d'encre sont de faible épaisseur, de 0,1 à 5 microns.

6. Ruban de fibres optiques selon l'une des revendications 1 à 5, caractérisé en ce que ladite pellicule (5) recouvrant chaque fibre marquée est en résine polymérisable aux ultraviolets et de faible épaisseur, de l'ordre de 5 microns.

7. Ruban de fibres optiques selon la revendication 6, caractérisé en ce que l'agent anti-adhésif contenu dans ladite résine est un composé carboxylique.

8. Ruban de fibres optiques selon l'une des revendications 1 à 7, caractérisé en ce que ledit revêtement commun extérieur (17,27) est en résine transparente, polymérisable aux ultraviolets.

9. Ruban de fibres optiques selon l'une des revendications 1 à 8, caractérisé en ce qu'il comporte en outre un marquage d'identification (18, 28) sur la surface extérieure dudit revêtement commun extérieur, réalisé à l'encre sous forme de jeux de barres ou éléments annulaires de codage d'un numéro affecté au ruban et/ou d'informations additionnelles relatives audit ruban.

## Patentansprüche

1. Band von individualisierten Lichtleitfasern, bei dem die einzeln geschützten Fasern jeweils mit einem peripheren Überzug versehen sind, der ein Antihaftmittel enthält, und so nebeneinander in einer gemeinsamen äußeren Ummantelung eingekapselt sind, dadurch gekennzeichnet, daß die geschützten Fasern Gruppen von ringförmigen Farbmarkierungen (4) auf ihrer äußeren Oberfläche tragen, wobei diese Gruppen auf derselben geschützten Faser untereinander identisch sind, sich jedoch von einer geschützten Faser zur anderen unterscheiden, die Individualisierung dieser Fasern (1A-1D) gewährleisten und den Platz jeder betreffenden Faser in dem Band angeben, und daß der periphere Überzug (5) auf jeder der Fasern transparent ist und die von dieser Faser getragenen Markierungsgruppen überdeckt.

2. Lichtleitfaserband nach Anspruch 1, dadurch gekennzeichnet, daß die Markierungsgruppen auf den geschützten Fasern im wesentliche denselben Markierungsabstand aufweisen.

3. Lichtleitfaserband nach Anspruch 2, dadurch gekennzeichnet, daß sich die Markierungsgruppen der Fasern auf diesen Fasern vorzugsweise im wesentlichen gegenüberliegen.

4. Lichtleitfaserband nach einem der Ansprüche 1 bis 3, dadurch gekennzeichnet, daß sich die Markierungsgruppen von einer Faser zur anderen durch die Zahl der Markierungen unterscheiden, die sie enthalten, wobei diese Zahl den Platz der betreffenden Faser in dem Band angibt.

5. Lichtleitfaserband nach einem der Ansprüche 1 bis 4, dadurch gekennzeichnet, daß die Farbmarkierungen von geringer Dicke zwischen 0,1 und 5 Mikrometern sind.

6. Lichtleitfaserband nach einem der Ansprüche 1 bis 5, dadurch gekennzeichnet, daß der Überzug (5), der jede markierte Faser überdeckt, aus UV-polymerisierbarem Harz besteht und von geringer Dicke in der Größenordnung von 5 Mikrometern ist.

7. Lichtleitfaserband nach Anspruch 6, dadurch gekennzeichnet, daß das in dem Harz enthaltene Antihaftmittel eine Carboxylverbindung ist.

8. Lichtleitfaserband nach einem der Ansprüche 1 bis 7, dadurch gekennzeichnet, daß die gemeinsame äußere Ummantelung (17, 27) aus transparentem, UV-polymerisierbarem Harz ist.

9. Lichtleitfaserband nach einem der Ansprüche 1 bis 8, dadurch gekennzeichnet, daß sie außerdem eine Kennzeichnung (18, 28) auf der äußeren Oberfläche der gemeinsamen äußeren Ummantelung aufweist, die mit Farbe in Form von Gruppen von Streifen oder ringförmigen Elementen, welche eine dem Band zugewiesene Nummer und/oder zusätzliche Informationen kodieren, verwirklicht ist.

## Claims

1. A ribbon of individualized optical fibers in which each individually protected fiber is provided with a peripheral film containing an anti-adhesive agent, and the fibers are encapsulated in this condition side by side in a common outside covering, the ribbon being characterized in that said protected fibers carry sets of annular ink marks (4) on their outside surfaces, said sets of marks being identical to one another on a given protected fiber but differing from one protected fiber to another, serving to individualize said fibers (1A-1D), and being representative of the rank of each fiber in question within the ribbon, and in that said peripheral film (5) on each of said fibers is transparent and covers the set of marks that are carried by said fiber.

2. An optical fiber ribbon according to claim 1, characterized in that said sets of marks on the protected fibers are at substantially the same marking pitch.

3. An optical fiber ribbon according to claim 2, characterized in that said sets of marks on said fibers are preferably substantially level with one another on said fibers.

4. An optical fiber ribbon according to any one of claims 1 to 3, characterized in that said sets of marks differ from one fiber to another in the number of marks in each set, said number being representative of the rank of the fiber concerned within the ribbon.

5. An optical fiber ribbon according to any one of claims 1 to 4, characterized in that said ink marks are thin, being 0.1 microns to 5 microns thick.

6. An optical fiber ribbon according to any one of claims 1 to 5, characterized in that said film (5) coating each marked fiber is made of a UV-polymerizable resin that is thin, being about 5 microns thick.

7. An optical fiber ribbon according to claim 6, characterized in that the anti-adhesive agent contained in said resin is a carboxylic compound.

8. An optical fiber ribbon according to any one of claims 1 to 7, characterized in that said common outside covering (11, 21) is made of a transparent UV-polymerizable resin.

9. An optical fiber ribbon according to any one of claims 1 to 8, characterized in that it further includes identification marking (14, 24) on the outside surface of said common outside covering, made with ink to form sets of bars or of annular elements encoding a number allocated to the ribbon and/or additional information relating to said ribbon.
